# EUROPEAN PATENT SPECIFICATION

(11) **EP 0 572 991 B1**
(45) Date of publication and mention of the grant of the patent: **30.10.1996**
(21) Application number: 93108827.2
(22) Date of filing: 02.06.1993
(51) Int. Cl.: H04M 17/02, G07F 7/00

(54) **A method of processing prepaid telephone calls**
Verfahren zum Verarbeiten von im voraus bezahlten Telefonanrufen
Méthode pour le traitement d'appels téléphoniques prépayés

(30) Priority: 02.06.1992 IL 102077
(43) Date of publication of application: 08.12.1993
(73) Proprietor: Fromer, Shmuel, Haifa (IL)
(72) Inventor: Fromer, Shmuel, Haifa (IL)
(74) Representative: Grättinger & Partner

(56) References cited:
- EP-A- 0 378 727
- CH-A- 460 417
- US-A- 4 706 275
- PATENT ABSTRACTS OF JAPAN vol. 14, no. 205 (E-0921) 26 April 1990 & JP-A-02 044 850 (NIPPON TELEGR & TELEPH CORP NTT ) 14 February 1990

## Description

### FIELD OF THE INVENTION

The present invention generally relates to telecommunication, and more particularly to communication from public telephone booth terminals, i.e. to prepaid calls.

### BACKGROUND OF THE INVENTION

Great efforts, investments and sophistication have been expended in providing efficient and convenient telephone booth telecommunication service for the benefit of the public at large. Among the most recent developments is the introduction of magnetic cards that are designed to replace the coin operated public telephone instruments. This was a result of the recognition that coin operated instruments suffer great many disadvantages in that the user has to be in possession of suitable number of coins on the one hand and on the other hand the instruments required frequent servicing and were liable to vandalism and thefts.

The magnetic card operated instruments (also known as a TELECARD), including in the present context also the credit card operated telephones, partly solved the problem in the sense that an article -- in the form of a single card -- could serve for a greater number of calls. However, this method involved a significant initial investment in equipment, installation and maintenance.

In addition, the large amount of discarded magnetic cards has been recognized to develop an ecological nuisance.

In U.S. Patent No. 4,706,275, a method and system for processing prepaid telephone calls has been proposed, based on special, certifiable code numbers, allocated to the calling parties against purchasing of credits. The credit amounts were stored in the computer of special central stations, thus enabling calls to be made from any ordinary, private telephone. This method, however, suffered a major inherent disadvantage in that the interested public had to undergo a series of preparatory steps -- mostly via credit card companies -- in order to become entitled to the benefits thereof.

It is therefore the main object of the present invention to enable the processing of prepaid telephone calls which, on the one hand, will overcome the disadvantages of both the coin/magnetic card operated public telephone booth extensions and, on the other hand, will render redundant any previous connection with any kind of organization, be it the telephone and/or credit card companies.

It is a further object of the invention to enable the processing of prepaid telephone calls by purchasing a blank ticket, envelope or the like, bearing an invisible -- but readily exposable -- secret code number (SCN) which enables access to a local public automatic telephone exchange (PABX), pre-programmed for processing such calls for a predetermined length of time (counter pulses).

### SUMMARY OF THE INVENTION

According to the invention there is provided a method of processing prepaid telephone calls, particularly for use in connection with public telephones, comprising the steps of programing the respective Public Automatic Branch exchange (PABX) to become toll-free accessible for incoming calls through dialling any one out of a series of predetermined numbers stored in a data-bank of the PABX, enabling the calling party to complete the connection with the called party, cutting-off the said connection after a prefixed time/counter pulses interval, erasing from the data-bank any number that has once been dialled, marking the said series of numbers, each on a vendible carrier member in an invisible - however readily exposable - manner, and offering the vendible carrier members for sale to the general public, so that the purchaser of a carrier member, after exposing the respective number, is enabled to place a call for the duration of the said interval.

The method may further comprise the step of first dialling a toll-free access number of the PABX.

Preferably, the said vendible carrier members are in the form of cards or tickets, said number being imprinted thereon and covered by a layer of a removable, opaque coating.

The conception lying at the base of the present invention can be put into practice in various manners as will be described hereinbelow.

### DETAILED DESCRIPTION OF THE PREFERRED EMBODIMENT

Any member of the public, who intends to use a public (or private -- see below) telephone will first purchase one or more cards which are valid for prepaid calls according to a selection of rates, say from 1 to 20 or more counter pulses. Every card will bear, in a non-exposed fashion, a secret code number (SCN) composed of a suitable number of digits, depending on the programing facilities of the PABX.

The SCN will be selected, at random, out of a series of numbers which differ from the bulk of the relevant subscriber numbers. Such SCN may include, as a prefix, the relevant toll-free number (800 as in the U.S.), and one or more identification combinations that are common to the whole series.

The SCNs will be printed on the cards by a reliable, official printing house in a computerized manner. The number will be covered by a layer of an opaque coating, which can be easily peeled off (e.g. by scratching with a coin as in lottery tickets).

Telephone booths will no longer be equipped with the expensive, specially designed and constructed telephone instruments, but rather with ordinary telephone sets similar to those of private subscribers.

The PABX will be programmed to allow a special path of connection upon identifying a call dialled by any one of the SCN series. It will also identify and analyze the prepaid amount of the respective SCN, and thus clear the path for the following subscriber number dialling, for a limited length of time (or number of counter pulses) represented by the prepaid amount, at the end of which the line will automatically be cut-off.

Optionally, a recorded message will warn the calling party before the lapse of the allowed time interval, and programmed to hold the line for a time sufficient to prolong the conversation by dialling another SCN.

Alternatively -- or in addition -- the available connection time can be shown on a monitor of the telephone set, again allowing the calling party to extend the connection time by repeating the procedure of dialling a SCN out of a separate card. On the other hand, in the event that a part of the allowed time is not to be used by the calling party, a respective credit can be recorded to his benefit, e.g. by dialing his private telephone number before the expiration of such uncompleted time interval exploitation.

Obviously, a SCN that has been once used is automatically erased from the SCN data-bank of the PABX. Periodical replacement of all the SCN cards may also become necessary, requiring the public to exchange, free of charge, the inventory of cards in their possession.

The distribution of the SCN cards will be based on the same commercial arrangement as it exists today with respect to coins or the telephone magnetic cards.

The advantages of the method according to the invention are self explanatory. The costs of the telephone booth sets will be dramatically reduced by using standard telephones (perhaps with a protecting casing). In fact, the use of the SCN method will also facilitate the use of private or subscriber telephones, such as in cases where one wishes to use somebody else's private phone in exchange for a SCN card -- rather than offering to pay the costs of such call.

It will be readily appreciated by those skilled in the art to which the present invention pertains that numerous variations and modifications can be applied to the conceptual approach of the method according to the present invention without departing from its scope as defined in and by the appended claims.

## Claims

1. A method of processing prepaid telephone calls, particularly for use in connection with public telephones, comprising the steps of -
(a) programming a respective Public Automatic Branch exchange (PABX) to become toll-free accessible for incoming calls through dialling any one out of a series of predetermined numbers stored in a data-bank of the PABX;
(b) enabling a calling party to complete a connection with a called party;
(c) cutting-off the said connection after a prefixed time/counter pulses interval;
(d) erasing from the data-bank any number that had once been dialled;
(e) marking the said series of numbers, each on a vendible carrier member in an invisible - however readily exposable - manner; and
(f) offering the vendible carrier members for sale to the general public,
so that purchasers of the carrier members, after exposing the respective number, are enabled to place a call for the duration of the said interval.

2. The method of Claim 1 further comprising the step of first dialling a toll-free access number of the PABX.

3. The method of Claim 1 wherein remaining amounts of the said interval are currently displayed to the calling party.

4. The method of Claim 3 wherein a remaining amount of an interval, at the end of an outgoing call, is creditable to a selected subscriber account by further dialling its telephone number.

5. The method of Claim 1 wherein the said vendible carrier members are in the form of cards, said number being imprinted thereon and covered by a layer of a removable, opaque coating.

6. The method of Claim 1 wherein the said vendible carrier members are in the form of cards placed in a sealed envelope.

## Patentansprüche

1. Verfahren zum Verarbeiten von im voraus bezahlten Telefonanrufen, insbesondere zur Verwendung im Zusammenhang mit öffentlichen Telefonen, welches die folgenden Schritte umfaßt:
(a) Programmieren eines jeweiligen öffentlichen automatischen Zweigamts (PABX) zum gebührenfreien Zugang für eingehende Anrufe durch Wählen einer beliebigen Nummer aus einer Serie von vorbestimmten Nummern, die in einer Datenbank des PABX gespeichert sind;
(b) einem Anrufer ermöglichen, eine Verbindung mit einem Angerufenen herzustellen;
(c) Unterbrechen der Verbindung nach einer festgesetzten Zeit/Zählimpulszeitraum;
(d) Löschen jeder Nummer, die einmal gewählt worden ist, aus der Datenbank;
(e) Markieren der Serien von Nummern, jede auf einem verkäuflichen Trägerelement in unsichtbarer, jedoch leicht freilegbarer Weise; und
(f) Anbieten der verkäuflichen Trägerelemente zum Verkauf an das öffentliche Publikum,
so daß Käufer der Trägerelemente nach Freilegen der jeweiligen Nummer die Möglichkeit haben, einen Anruf für die Dauer des genannten Zeitraums zu tätigen.

2. Verfahren nach Anspruch 1, welches des weiteren den Schritt umfaßt, zuerst eine gebührenfreie Zugangsnummer des PABX zu wählen.

3. Verfahren nach Anspruch 1,
dadurch gekennzeichnet,
daß dem Anrufer verbleibende Mengen des Zeitraums ständig angezeigt werden.

4. Verfahren nach Anspruch 3,
dadurch gekennzeichnet,
daß eine verbleibende Menge eines Zeitraums am Ende eines ausgehenden Anrufs einem ausgewählten Teilnehmerkonto durch weiteres Wählen seiner Telefonnummer gutgeschrieben werden kann.

5. Verfahren nach Anspruch 1,
dadurch gekennzeichnet,
daß die verkäuflichen Trägerelemente in Form von Karten erhältlich sind, wobei die Nummer aufgedruckt und durch eine Schicht aus entfernbarem, undurchsichtigem Belag bedeckt ist.

6. Verfahren nach Anspruch 1,
dadurch gekennzeichnet,
daß die verkäuflichen Trägerelemente in Form von Karten erhältlich sind, die in einen versiegelten Umschlag stecken.

## Revendications

1. Procédé pour le traitement d'appels téléphoniques prépayés, notamment pour une utilisation en liaison avec des téléphones publics, comprenant les étapes consistant à
(a) programmer le central automatique public respectif (PABX) pour qu'il devienne accessible sans taxe pour des appels arrivants par sélection de l'un quelconque d'une série de nombres prédéterminés mémorisés dans une banque de données du central (PABX);
(b) laisser une partie appelante établir une liaison avec la partie appelée;
(c) interrompre ladite liaison au bout d'un intervalle de temps/d'impulsions de comptage, fixé au préalable;
(d) effacer de la banque de données tout nombre qui a été sélectionné une fois au cadran;
(e) marquer ladite série de nombres, chacun sur un élément de support vendable, d'une manière invisible - mais de manière qu'il puisse être aisément exposé; et
(f) offrir les éléments de support vendables pour leur vente au public,
de sorte que des acheteurs des éléments de support peuvent, après exposition du numéro respectif, introduire un appel pendant la durée dudit intervalle.

2. Procédé selon la revendication 1, comprenant en outre l'étape consistant à sélectionner tout d'abord un numéro d'accès sans taxe, du central PABX.

3. Procédé selon la revendication 1, selon lequel des quantités restantes dudit intervalle sont affichées actuellement à la partie appelante.

4. Procédé selon la revendication 3, selon lequel une quantité restante d'un intervalle, à la fin d'un appel sortant, peut être créditée à un compte d'abonné sélectionné au moyen de la sélection ultérieure de son numéro de téléphone.

5. Procédé selon la revendication 1, selon lequel lesdits éléments de support vendables se présentent sous la forme de cartes, ledit nombre étant imprimé sur cette carte et recouvert par une couche d'un revêtement opaque amovible.

6. Procédé selon la revendication 1, selon lequel lesdits éléments de support vendables se présentent sous la forme de cartes placées dans une enveloppe scellée.
